# EUROPÄISCHE PATENTSCHRIFT

(11) **EP 2 575 298 B1**
(45) Veröffentlichungstag und Bekanntmachung des Hinweises auf die Patenterteilung: **06.04.2016**
(21) Anmeldenummer: 12179877.1
(22) Anmeldetag: 09.08.2012
(51) Int. Cl.: H04L 12/58

(54) **Verfahren und Vorrichtung zur sicheren Abwicklung einer E-Mail-Kommunikation**
Method and device for secure handling of an email message
Procédé et dispositif de réalisation sécurisée d'une communication par e-mail

(30) Priorität: 11.08.2011 DE 102011052608
(43) Veröffentlichungstag der Anmeldung: 03.04.2013
(73) Patentinhaber: brainchild GmbH, 84307 Eggenfelden (DE)
(72) Erfinder: Werner, Mike, 84307 Eggenfelden (DE)
(74) Vertreter: Gustorf, Gerhard

(56) Entgegenhaltungen:
- WO-A1-00/31944
- CA-A1- 2 390 817
- US-A1- 2004 133 775
- US-A1- 2008 282 078
- "Proxy (Rechnernetze)", Wikipedia , 30. Juli 2011 (2011-07-30), XP002690875, Gefunden im Internet: URL:http://de.wikipedia.org/w/index.php?ti tle=Proxy_%28Rechnernetz%29&oldid=91891758 &printable=yes [gefunden am 2013-01-21]

## Beschreibung

Die Erfindung betrifft eine Verschlüsselungsmethode für Nachrichten, die von einem Sender an einen Empfänger innerhalb eines LAN (Lokal Area Network) und / oder eines WAN (Wide Area Network) gesendet werden, weiter eine Einrichtung eines sicheren Informationskanals für die Kommunikation zwischen einem Sender und einem Empfänger, ein Verfahren zur Verschlüsselung von Daten, die zwischen einer ersten und zweiten Kommunikations-Endstelle übertragen werden und weiter ein Verfahren zur Verschlüsselung von Daten, die zwischen einem Computer (Mac, PC, Client / Server, Handheld aber auch Smartphone) und einem Datenträger oder einer in einem Netz freigegebenen Datenquelle versendet werden.

### 1. Verschlüsselung von E-Mails

Eine Verschlüsselung von E-Mails kann zum Beispiel im Wege einer Client-basierten E-Mail-Verschlüsselung oder einer Server-basierten E-Mail-Verschlüsselung erfolgen.

Eine Client-basierte E-Mail-Verschlüsselung geht mit dem Nachteil einher, dass sie für den Endanwender mit einem größeren und für einen Laien ohne technische Vorkenntnisse schwer zu bewältigenden Aufwand verbunden ist. Der End-User muss zur Verschlüsselung zunächst ein Zertifikat ("öffentlicher Schlüssel") des Empfängers anfragen, dann die E-Mail mit diesem verschlüsseln und verschicken. Er muss die Zertifikate verwalten, auf dem aktuellen Stand halten und ordnungsgemäß sichern. Will er eine E-Mail empfangen, so muss er ein Zertifikat ("öffentlicher Schlüssel") zur Verfügung stellen, die E-Mail empfangen und mit einem eigenen Zertifikat ("privater Schlüssel") öffnen. Bei den eigenen Zertifikaten muss er ebenfalls Sorge hinsichtlich einer ordnungsgemäßen Verwahrung, Aktualisierung und Sicherung tragen. Handelt der End-User in einem Firmennetzwerk und werden die Zertifikate nicht zentral verwaltet oder gespeichert, dann entsteht ein erheblicher Verwaltungsmehraufwand, weil jeder Client in einem Netzwerk die eigene Zertifikatsverwaltung übernimmt.

Weiter helfen hier Server-basierte E-Mail Verschlüsselungssysteme. Allerdings haben diese den Nachteil, dass sie für viele Organisationen und vor allem für private Endanwender zu komplex und teuer sind. Für ein Server-basiertes E-Mail-Verschlüsselungssystem ist eine geeignete IT-Infrastruktur notwendig, die administrativ betreut wird. Zwar wird jedem einzelnen User die Arbeit für die Verwaltung der Zertifikate abgenommen, die Arbeit wird zentralisiert und systematisiert, erübrigt sich jedoch nicht. Ein Administrator mit Zugriff zu allen notwendigen Informationen stellt zudem einen Risikofaktor dar.

Beide Systeme sind mit dem Nachteil behaftet, dass Zertifikate administrativ verwaltet, gespeichert, gesichert und aktualisiert werden müssen. Weiter wird auch die Verschlüsselung nicht ohne einen gewissen Arbeitsaufwand abgewickelt. Bemächtigen sich Dritte der Systeme, so können diese manipulativ zum Schaden der Anwender eingreifen.

Nach der EP 1536601 wird daher ein Verschlüsselungssystem vorgeschlagen, das bereits innerhalb des eigenen Firmennetzwerks des Senders E-Mails verschlüsselt. Um E-Mails auch innerhalb eines Systems sicher zu machen, versendet nämlich ein E-Mail-Server so genannte Pro-forma-Zertifikate an die Clients, die damit die E-Mails verschlüsseln. Nachteilig an dem System ist der hohe technische Aufwand und auch die Gefahr, dass manipulierend auf Server oder Client zugegriffen werden kann.

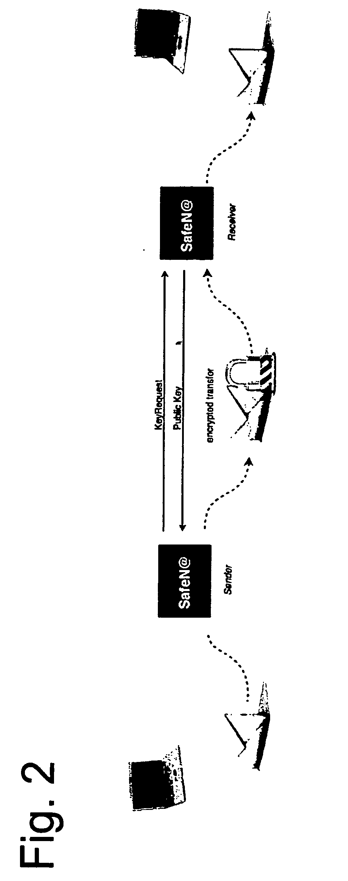

Die EP 1788770 beschreibt ebenfalls eine Methode einer sicheren E-Mail-Kommunikation zwischen Sender und Empfänger, wobei der Sender mit einem öffentlichen Schlüssel des Empfängers, der in der eigenen Datenbank bereits vorhanden ist oder noch beim Empfänger abgefragt wird, die E-Mail verschlüsselt und versendet. Wie in der Figur 2 der EP 1788700 beschrieben, besteht das Verschlüsselungssystem aus Software und Hardwarekomponenten mit einem Betriebssystem wie "Windows Server" oder "Linux", die auf einem Server in einer Computerdomäne betrieben werden. Dieser Hardwareeinsatz ist jedoch teuer und da die Computerkomponenten über MAC- oder IP-Adresse verfügen, kann das Verschlüsselungssystem ebenfalls angesteuert und manipuliert werden.

Weiter beschreibt die US 2008/0282078 A1 ein dediziertes Mail-Gateway, das empfangene Nutzdaten ("plain text mail") verschlüsselt und an einen Empfänger weiterleitet, wobei wesentliche Funktion ist, einen Fehler im Sende- und Verschlüsselungsvorgang zu ermitteln und den Anwender hierüber zu informieren. Diese serverseitige Verschlüsselungslösung geht mit dem Nachteil eines Installations- und Administrationsaufwandes einher und ist aufgrund der verfügbaren Adressen auch manipulierbar.

Die US 2007/0192583 beschreibt eine transparent zwischen ein LAN und ein WAN eingebundene Bridge, deren Aufgabe es ist, einen (Heim-)Computer vor Gefahren aus dem Internet zu schützen. Die vorgeschlagene Vorrichtung verfügt jedoch nicht über die gemäß der vorliegenden Erfindung vorgesehenen Funktionen einer autonomen Verschlüsselung und Schlüsselverwaltung.

### 2. Verschlüsselung von Dateien und Datenträgern

Neben den Daten, die über ein Netzwerk (LAN oder WAN) ausgetauscht werden (E-Mails, Chat, etc.) und nur kurzfristig auf flüchtigen Speichern zwischengespeichert werden, besteht ferner die Notwendigkeit, Daten, die zeitlich unbefristet gespeichert werden, vor dem Zugang Dritter zu schützen. Dabei macht es keinen Unterschied, ob die Daten auf einem greifbaren Datenträger wie einem USB-Stick, einer internen / externen Festplatte oder dergleichen oder auf einem Netzlaufwerk (Lokales Netzwerk) oder sich nicht mehr auf dem lokalen Rechner oder im Firmenrechenzentrum, sondern in einer (metaphorischen) Wolke, genannt "cloud", befinden. In jedem Fall mag es notwendig sein, Daten sicher, das heißt verschlüsselt zu übertragen und diese dann in der verschlüsselten Form auf den Speicherelementen abzulegen und nur durch Authentifizierung mit einem Zertifikat zugänglich zu machen.

Nach dem Stand der Technik sind einige Programme auf dem Markt verfügbar. BitLocker ist zum Beispiel eine Festplattenverschlüsselung des Unternehmens Microsoft ®, die in den Ausführungen Ultimate und Enterprise der Betriebssysteme Windows Vista ® und Windows 7 ® sowie in Windows Server 2008 ® enthalten sind und es ermöglichen, alternativ oder zusätzlich zur Eingabe einer PIN mit einer Schlüsseldatei (verfügbar über USB-Stick) das System zu starten oder Dateien anzufordern.

TrueCrypt ® (www.truecrypt.org) ist ebenfalls eine Software zur Datenverschlüsselung, insbesondere dient sie der vollständigen oder partiellen Verschlüsselung von Festplatten und Wechseldatenträgern.

TrueCrypt ® kennt drei Arbeitsweisen im Umgang mit verschlüsselten Daten: Ein ganzes Gerät (beispielsweise eine Festplatte) oder eine bestehende Partition wird verschlüsselt. Hier können vor der Verschlüsselung vorhandene Daten erhalten und verschlüsselt werden. Weiter können sogenannte Container-Dateien erstellt werden. Container sind insbesondere geeignet, auf einer ansonsten nicht verschlüsselten Partition einen privaten verschlüsselten Bereich für sensible Daten anzulegen. Der User muss jedoch zum Lesen und Schreiben die Datei mounten, weiter muss der User stets ein Zertifikat und für eine ordentliche Verschlüsselung ein gutes Passwort verfügbar haben. Beiden Systemen ist gemeinsam, dass sie für den End-User mit einem erheblichen Aufwand verbunden sind und dieser mit dem sicheren Umgang und der Verwahrung von Zertifikaten und Passwörtern ebenso wie mit dem Umgang mit verschlüsselten Bereichen vertraut sein muss. Da nämlich oftmals keine lesbaren Kopfzeilen für die verschlüsselten Dateien angelegt werden und auch eine Dateistruktur (z.B. NTFS oder FAT) nicht erhalten bleibt, kann ein laienhafter oder sorgloser Umgang schnell zum unwiederbringlichen Verlust sämtlicher Daten führen.

Aufgabe der vorliegenden Verbindung ist, ein System mit einem Gerät zur Verfügung zu stellen, das an einen Computer (Mac, PC, Client / Server, Handheld aber auch Smartphone) angeschlossen werden kann, diesen mit einer Netzinfrastruktur verbindet und die Aufgabe der Schlüsselverwaltung, der Verschlüsselung und Entschlüsselung vollautomatisch übernimmt und dabei sowohl E-Mails oder allgemein Nutzdaten als auch Dateien verschlüsseln und diese so sicher in einem Netzwerk übertragen und/oder sicher auf einem Datenträger ablegen kann. Dabei ist die Vorrichtung so in ein System einzubinden, dass es von unberechtigten Dritten nicht angesteuert und manipuliert werden kann.

Die Lösung der Aufgabe ergibt sich aus den Ansprüchen 1 und 14, vorteilhafte Ausführungsformen finden sich in den Unteransprüchen.

### Beschreibung der Erfindung

In einer Ausführungsform verfügt das Gerät über Schnittstellen wie z.B. Ethernet, W-LAN, Bluetooth oder Mobilfunkschnittstellen oder dergleichen, über die es einen Computer in ein LAN oder WAN einbindet. Bestimmungsgemäß soll der Einsatz des Gerätes nicht nur für einen Computer, also einen Heim-PC oder einen Firmen-PC (Client, Server), sondern auch für einen Mac, ein Handheld, ein Smartphone, einen Tablet-PC oder ein Gateway geeignet sein, wobei im Falle eines Handheld, eines Smartphones, eines Tablet-PC oder eines Gateways das Gerät als embedded system ausgeführt sein kann.

Das Gerät ist dabei ein technisches Bindeglied, das über keine eigene MAC oder IP-Adresse verfügt und deshalb für Dritte und für andere Geräte der Netzinfrastruktur unsichtbar ist. Das Gerät kann also nicht direkt angesteuert werden. Andererseits ist dem Gerät dadurch, dass es einen Datenstrom zwischen einem Sender und einem Empfänger (betreuter Computer) mitliest, die MAC oder IP-Adresse des von ihm betreuten Computer bekannt. Ändert sich diese Adresse, so führt es erfindungsgemäß einen Reset durch und initialisiert und restrukturiert sich neu, wenn das Gerät an einen neuen Computer angeschlossen wird. Ferner kann selbstverständlich auch der User einen Hardwarereset durchführen und so die Initialisierung und Neustrukturierung auslösen.

Mit Hilfe eines Identifikationsprogramms, eines Verschlüsselungsprogramms und eines Schlüsselverwaltungsprogramms werden die notwendigen Schritte durchgeführt, um sicher verschlüsselte Nachrichten oder allgemein Nutzdaten von einem Sender an einen Empfänger innerhalb eines LAN und / oder eines WAN zu senden, einen sicheren Informationskanal für die Kommunikation zwischen einem Sender und einem Empfänger einzurichten oder allgemein sicher verschlüsselte Dateien zwischen einer ersten und zweiten Kommunikations-Endstelle zu übertragen. Das Gerät arbeitet völlig autonom und ohne administrativen Eingriff, die Programme laufen als Routine ab.

Das **Identifikationsprogramm** liest einen Datenstrom zwischen einem Sender und Empfänger. Es identifiziert das Kommunikationsprotokoll und ermittelt die Anwendungsebene, weiter identifiziert es die Nutzdaten und filtert diese heraus.

Die Nutzdaten und die Identifikationsmerkmale der Nutzdaten werden an das Verschlüsselungsprogramm weitergereicht.

Das Verschlüsselungsprogramm fordert mit Weiterreichung der Identifikationsmerkmale der Nutzdaten an das **Schlüsselverwaltungsprogramm** von diesem einen zutreffenden und für die Verschlüsselung notwendigen Schlüssel an.

Nach einer Plausibilitätskontrolle, ob der zutreffende Schlüssel vorliegt, wird die Verschlüsselung der Nutzdaten vorgenommen, wobei das Verschlüsselungsprogramm, weil Dateien regelmäßig größer als 1518 Bytes (Ethernet-Protokoll) sind und Dateien als Dateifragmente zerstückelt und auf verschiedenen Wegen übertragen werden, die Dateifragmente in einer logischen Reihenfolge abarbeitet, wobei verfrüht ankommende Dateifragmente kurzfristig zwischengespeichert und bei zeitlicher Fälligkeit abgearbeitet werden und ein vorausgegangenes verschlüsseltes Nutzdatum in ein dazu gehöriges späteres Nutzdatum bei der Verschlüsselung eingerechnet wird. Erfindungsgemäß werden die Dateifragmente nicht zusammengesetzt, sondern als Dateifragmente bearbeitet und sofort weitergeleitet. Der Datenstrom wird nur insoweit angepasst, als eine ursprüngliche Chronologie wiederhergestellt wird; da im Übrigen im "Fluss" wie bei einer "Sychronübersetzung" verschlüsselt wird, erfolgt die Kommunikation in Echtzeit, da die Dauer eines Vorgangs (auch eine Wartezeit) vorhersehbar ist.

Aufgabe des **Verschlüsselungsprogrammes** ist neben der Verschlüsselung auch der umgekehrte Fall der Entschlüsselung. Bei der Entschlüsselung wird ein eigener privater Schlüssel, der mit dem erhaltenen eigenen öffentlichen Schlüssel korrespondiert, entschlüsselt.

Wurde auf der Senderseite ein falscher oder veralteter öffentlicher Schlüssel eingesetzt, bieten sich vier Optionen an:
- das Programm sendet eine Fehlermeldung, weil es das Nutzdatum nicht entschlüsseln konnte
- das Programm sendet die Nachricht, da das Nutzdatum nicht entschlüsselt werden konnte, zurück
- das Programm nimmt die Nachricht bereits nicht an, weil die Identifikationsmerkmale des Nutzdatums auf einen veralteten oder falschen Schlüssel hinweisen
- die Nachricht wird unverschlüsselt an den Empfänger weitergeleitet.

Das Verschlüsselungsprogramm ist vorzugsweise in der Lage, gemäß der dritten Option zu verfahren, weil es aufgrund der durch das Identifizierungsprogramm vorliegenden Identifizierungsmerkmale in der Lage ist, vor Einleitung einer Verschlüsselung bereits frühzeitig einen Fehler zu erkennen und weitere Arbeitsschritte zu vermeiden.

Das **Schlüsselverwaltungsprogramm** ist in der Lage, umfassend eigene private, eigene öffentliche und fremde öffentliche Schlüssel zu verwalten, dem Verschlüsselungsprogramm oder einem externen Dritten (Sender) zur Verfügung zu stellen, eigene Schlüssel zu generieren und deren Aktualität anhand von Plausibilitätskriterien zu gewährleisten.

Dabei ist es in der Lage, einen Schlüssel applikations- und protokollspezifisch sowie auf Bedarf auch userspezifisch zu generieren. Das bedeutet, dass der Schlüssel für verschiedene Applikationen, wie zum Beispiel für E-Mail-Nachrichten, für eine Chat-Kommunikation, für die Hinterlegung von Informationen auf einer Homepage oder einer Plattform oder in einem sozialen Netzwerk generiert, vorgehalten und zur Verfügung gestellt wird. Dabei entspricht der Schlüssel auch den jeweiligen Anforderungen der Kommunikationsprotokolle. Weiter kann der Schlüssel, wie gesagt, auch für einen jeweiligen User (Sender nach E-Mail-Sender, Besucher einer Internetseite usw.) angefertigt sein. Das Schlüsselverwaltungsprogramm verwaltet demgemäß eine umfangreiche und mehrschichtige Datenbank. Dabei pflegt das Schlüsselverwaltungsprogramm die implementierte Datenbank und hält Schlüssel, also die eigenen wie auch die fremden Schlüssel jeweils aktuell.

So werden eigene Schlüssel nach einer Logik erneuert. Gründe für eine Aktualisierung können sein:
- Kompromittierung des Schlüssels
- Zeitablauf
- missbräuchliche Mehrfachabfrage von Seiten Dritter
- Anschluss des Gerätes an einen neuen Computer (neue Identität)
- Hardwarereset durch User

Fremde öffentliche Schlüssel werden (neu) angefordert:
- erstmaliger Nachrichtenversand an Empfänger
- Kompromittierung eines gespeicherten Schlüssels
- Zeitablauf
- wenn eine Nachricht beim Empfänger nicht angekommen ist und erneut versandt werden muss
- Anschluss des Gerätes an einen neuen Computer (neue Identität)
- Hardwarereset durch User

Liegt kein fremder öffentlicher Schlüssel (erstmaliger Versand einer Nachricht an den Empfänger) vor, so wird dieser beim Empfänger abgefragt, indem eine an den Empfänger (bzw. dessen Computer) adressierte Nachricht an diesen geschickt wird.

Weil das Gerät über keine Adresse verfügt, kann eine Nachricht nicht direkt an das Gerät geschickt werden. Weil das Identifizierungsprogramm des Geräts den Datenstrom mitliest, wird es die Nachricht identifizieren und zur Beantwortung an das Schlüsselverwaltungsprogramm weiterleiten. Das autonom arbeitende Schlüsselverwaltungsprogramm wird die Schlüsselabfrage beantworten und den Schlüssel mit einer Nachricht an den Sender zurücksenden. Vorzugsweise wird das Identifizierungs- bzw. das Schlüsselverwaltungsprogramm, nachdem es die Nachricht zur Schlüsselabfrage gelesen und bearbeitet hat, dies löschen, um so den Empfänger nicht mit unnötigen Informationen zu belasten. Eine Schlüsselabfrage kann selbst verschlüsselt sein.

Die Nachrichten werden zwar an den jeweiligen Computer des Senders oder Empfängers adressiert, diese jedoch von den Geräten "abgefangen" und beantwortet. Die Computer werden damit mit keinem Nachrichtenverkehr belastet.

Weil eine E-Mail zudem so lange beim Sender verbleibt, bis der Empfänger einen Datenstrom herstellt und das Gerät des Empfänger dann den Datenstrom mitliest und die Schlüsselabfrage des Gerätes des Senders beantwortet, wird der E-Mail-Verkehr weiter reduziert. Der Empfänger stellt einen Datenstrom zum Beispiel dadurch her, dass er seinen Computer einschaltet und seine Mailbox abfragt.

Für eine schnelle Kommunikation ist es denkbar, fremde Schlüssel nach einem gewissen Zeitablauf bei Empfängern regelmäßig abzufragen, was vor allem dann sinnvoll ist, wenn eine intensive Kommunikation stattfindet.

Vorzugsweise fragt das Schlüsselverwaltungsprogramm öffentliche Schlüssel bei Empfängern jedoch dann ab, wenn die Empfänger in einer internen Liste X stehen, im Zeitraum Y eine Anzahl von Z Nachrichten erhalten hatten und vorzugsweise die Anzahl der Nachrichten im Verhältnis zu den versandten Gesamtnachrichten in einem hohen Verhältnis stehen; besonders bevorzugt liegt dieses Verhältnis bei 0,8.

Ein neuer Schlüssel wird ferner dann abgefragt, wenn das Gerät des Empfängers eine Fehlermeldung schickt oder wenn eine versandte Nachricht zurückkommt. Fremde Schlüssel werden aus Sicherheitsgründen stets dann gelöscht, wenn das Gerät an einen Computer mit eigener Identität mit der neuen Identität angeschlossen wird. Ferner werden alle Schlüssel gelöscht, wenn das Gerät geöffnet wird.

Die beschriebenen, autonom arbeitenden Programme greifen ineinander, die Aufgaben sind nicht strikt einem Programm zugewiesen, sondern können auch von einem jeweiligen anderen Programm ausgeführt werden.

Auch weitere auf dem Gerät implementierte Programme sind so ausgestaltet, dass ein Eingriff von "außen", das heißt von Seiten Dritter nicht möglich ist. Sie laufen völlig autonom ohne administrativen Zugriff ab.

In einer weiteren erfindungsgemäßen Ausführungsform verfügt das Gerät über ein zusätzliches adressierbares Modul, welches über Identifikationsmerkmale wie IP-Adresse oder MAC-Adresse verfügt und Aufgaben nach dem Erfindungsgedanken ebenfalls autonom bearbeitet und beantwortet. Auf dem adressierbaren Modul werden Informationen verwaltet, die eines Eingriffs des Users (Computer) oder eines Administrators (Netzwerk) bedürfen. Das adressierbare Modul kann selbst ferner Funktionen eines Routers übernehmen.

Weiter eröffnet das adressierbare Modul die Möglichkeit, Whitelists und Blacklists zu verwalten sowie Virenscanner einzusetzen oder ein Usermanagement zu applizieren. Unter Usermanagement wird verstanden, eine Datenbank zu verwalten, in denen Benutzer (Dritte) vermerkt werden, denen bestimmte Rechte eingeräumt werden und denen zur Wahrnehmung ihrer Rechte ein eigener Schlüssel zur Verfügung gestellt wird, wobei sich die Rechte auf die Entschlüsselung von Nutzdateien wie Texte, Bilder, Musik auf Applikationen wie Facebook, Xing oder sonstige Blogs bezieht. Das adressierbare Modul legt dann weitere userspezifische Metadaten für jeden Benutzer (Dritten) an, die die Identifizierungsmerkmale der Nutzdateien ergänzen, die auf genannten Applikationen abgelegt sind.

### 1. Beispiel Nachrichtenübermittlung per E-Mail

### a. Versenden einer E-Mail

Versendet ein User nach dem Stand der Technik eine E-Mail, so wird er diese selbst verschlüsseln oder an einen dedizierten E-Mail-Server senden, der die Verschlüsselung vornimmt und die Email an den Empfänger weiterreicht. Wird eine E-Mail von einem dedizierter E-Mail-Server entgegengenommen, so liegt diese regelmäßig vollständig in einem Paket und in der Anwendungsschicht vor. Da keine fragmentierten Dateien keine Anwendungsschichten durchlaufen und die Abwicklung nicht in Echtzeit durchgeführt werden muss, kann eine Ver- oder Entschlüsselung ohne Zeitdruck und "organisatorischen" Sortieraufwand erledigt werden. Weiter liegen nach dem Stand der Technik Schlüssel in einer administrierten Datenbank vor, auf die der Server zur Ent- oder Verschlüsselung einfach zugreifen muss. Das erfindungsgemäße Verfahren soll jedoch ohne administrative Hilfe autonom ablaufen, dabei möglichst in Echtzeit, wobei Dateifragmente unter höchstem Zeitdruck sortiert und zwischengespeichert werden und gleichzeitig der zur Verschlüsselung notwendige öffentliche Schlüssel des Empfängers von einem Schlüsselverwaltungsprogramm abgefragt werden soll. Erfindungsgemäß wird diese Aufgabenstellung wie folgt gelöst:
Gemäß der Erfindung versendet der User eine E-Mail in "plain-Text" an den Empfänger.

Das in das Gerät implementierte Identifizierungsprogramm liest erfindungsgemäß den Datenstrom zwischen dem Sender und dem Empfänger. Es identifiziert das Kommunikationsprotokoll und ermittelt die Anwendungsebene, weiter identifiziert es die Nutzdaten und filtert diese heraus.

Die Nutzdaten und die Identifikationsmerkmale der Nutzdaten werden sodann an das Verschlüsselungsprogramme weitergereicht.

Das Verschlüsselungsprogramm fordert mit der Weiterleitung der Identifizierungsmerkmale der Nutzdaten an das Schlüsselverwaltungsprogramm von diesem den zutreffenden öffentlichen Schlüssel des Empfängers an.

Weil Dateien regelmäßig größer als 1518 Bytes (Ethernet-Protokoll) sind und Dateien als Dateifragmente zerstückelt und auf verschiedenen Wegen übertragen werden, wird das Verschlüsselungsprogramm Dateifragmente in chronologischer Reihenfolge abarbeiten; verfrüht ankommende Dateifragmente werden kurzfristig zwischengespeichert und bei zeitlicher Fälligkeit abgearbeitet, wobei ein vorausgegangenes verschlüsseltes Nutzdatum in ein dazu gehöriger späteres Nutzdatum bei der Verschlüsselung eingerechnet wird. Erfindungsgemäß werden die Dateifragmente nicht zusammengesetzt, sondern als Dateifragmente bearbeitet und sofort weitergeleitet. Der Datenstrom wird nur insoweit angepasst, als eine ursprüngliche Chronologie wiederhergestellt wird. Der Datenstrom wird dabei in Echtzeit wie bei einer Synchronübersetzung durchgeleitet.

Das genannte Schlüsselverwaltungsprogramm prüft anhand der vom Identifizierungsprogramm übermittelten Identifizierungsmerkmale in einer internen Datenbank, ob der Empfänger und dessen "öffentlicher Schlüssel" bereits bekannt sind.

Identifikationsmerkmale können demgemäß Name, Alias-Name, E-Mail-Adresse, MAC oder IP-Adresse oder dergleichen sein. Diese Identifikationsmerkmale sind in der internen Schlüsseldatenbank hinterlegt und diesen ist ein öffentlicher Schlüssel eines Empfängers zugewiesen.

Gleichzeitig führt das Schlüsselverwaltungsprogramm eine automatische Plausibilitätsprüfung z.B. hinsichtlich Aktualität des öffentlichen Empfänger-Schlüssels durch. Im Rahmen der Plausibilitätsprüfung werden Merkmale wie Alter, Echtheit, Hash-Wert, Kompatibilität mit Verschlüsselungssystem geprüft. Fällt die Plausibilitätsprüfung negativ aus, wird sofort ein neuer öffentlicher Schlüssel beim Empfänger angefordert.

Es gilt:
1. Ist der öffentliche Schlüssel in der eigenen Datenbank vorhanden, so wird die E-Mail mit dem öffentlichen Schlüssel durch das Verschlüsselungsprogramm verschlüsselt und versandt. Das Gerät des Empfängers wird die empfangene E-Mail wie oben beschrieben prüfen, anschließend mit dem eigenen privaten Schlüssel entschlüsseln und dem User zur Verfügung stellen.
   Die Grundeinstellung des Geräts ist, dass alle E-Mails grundsätzlich verschlüsselt werden.
   Nur ausnahmsweise kann auf das Verschlüsseln von E-Mails verzichtet werden, wenn dies entsprechend in einer so genannten Whitelist vermerkt ist. Eine solche Whitelist kann in einer internen Datenbank angelegt und in das adressierbare Modul implementiert sein. Der User kann über eine Benutzeroberfläche auf die Datenbank auf dem adressierbaren Modul zugreifen und hat die Möglichkeit, diese zu individualisieren, zu ergänzen oder zu verbessern.
   Ebenso verhält es sich mit einer bereits erwähnten Liste der unerwünschten Sender ("Spammer"), einer so genannten "Blacklist", die ebenfalls über eine verschlüsselte Verbindung (TLS bzw. SSL) abgefragt wird. In beiden Fällen autorisiert sich das Gerät mithilfe der Adressen (MAC oder IP) des von ihm betreuten Computers.
2. Ist der öffentliche Schlüssel in der eigenen Datenbank nicht vorhanden, so wird das Schlüsselverwaltungsprogramm unter Vorlage des eigenen öffentlichen Schlüssels eine Anfrage an den Empfänger schicken. Die Vorlage des eigenen öffentlichen Schlüssels dient dabei der Identifizierung. Wenn der Empfänger ebenfalls über das Gerät nach Anspruch 1 verfügt, so wird dieses die Anfrage automatisch beantworten und an das Gerät des Senders einen öffentlichen Schlüssel übermitteln, den das Schlüsselverwaltungsprogramm des Senders automatisch in die eigene Verwaltung übernimmt. Anschließend wird das Gerät des Senders wie in Schritt 1 beschrieben die E-Mail verschlüsseln und an den Empfänger versenden. Auf Seiten des Empfängers wiederum wird das Gerät erfindungsgemäß aktiv, liest den Datenstrom, erkennt die E-Mail anhand der Dateistruktur und führt die Schritte wie unter "b. Empfang einer E-Mail" beschrieben aus.
3. Verfügt die Gegenseite (Empfänger) über kein Gerät und soll dennoch eine E-Mail an dieses geschickt werden, so gibt es folgende Möglichkeiten:
   a. Das Gerät schickt an die Gegenseite eine Anfrage und fordert unter Vorlage eines eigenen öffentlichen Schlüssels den öffentlichen Schlüssel des Adressaten an und erhält diesen direkt oder als Anhang einer E-Mail und führt die weiteren Schritte wie unter Ziffer 1 aus.
   b. Das Gerät wandelt die E-Mail in ein passwortgeschütztes PDF um und versendet dieses, oder das Gerät erstellt einen Container und fügt dort die zu verschlüsselnde Datei ein. Aus Gründen der Sicherheit wird für die Versendung des Passworts ein zweiter Kanal gewählt, so kann die Gegenseite ein Passwort per SMS, FAX oder Telefon erhalten, wobei sich das Gerät zum Zwecke des Passwortversands der Adressen des "betreuten" Computers oder nach einer weiteren Ausführungsform der Adresse des "adressierbaren Moduls" bedient.
      SMS werden über einen Signalisierungs-Kanal des GSM-Standards wie etwa SDCCH (Stand-alone Dedicated Control Channel) oder FACCH (Fast Associated Control Channel) versendet. Das Gerät baut jedoch selbst keine Verbindung auf, sondern veranlasst hierzu entweder den "betreuten" Computer oder das adressierbare Modul.
      Gleichermaßen kann mit der Passwortübermittlung per Fax verfahren werden, hier kann das Adressierbare Modul entweder eine E-Mail an ein Gateway senden, welche diese dann als Fax weiterschickt (Mail2Fax) oder das Gerät bedient sich der Leistung eines autorisierten und vertrauenswürdigen Dienstleisters.
   c. Der Empfänger der E-Mail ist in einer der vorgenannten Whiteliste aufgeführt und erhält eine unverschlüsselte E-Mail.
   d. Die E-Mail wird nicht zugestellt und verbleibt im Postausgang des Users.

Grundsätzlich bleibt die ursprüngliche E-Mail stets solange im Postausgang des Computers, bis eine der Optionen a) bis c) ausgeführt ist. Wird die E-Mail nicht versandt, erhält der User eine Fehlermeldung. Gemäß der Präferenz, dass alle E-Mails grundsätzlich verschlüsselt versendet werden, erhält der User einen Report, wenn eine E-Mail unverschlüsselt versandt (entsprechend der Vorgaben der Whitelist) wurde.

Da die Kommunikation zwischen dem Gerät und dem Computer direkt abläuft und nicht über das öffentliche Netzwerk, ist das Risiko, dass Informationen manipuliert werden können, minimiert bzw. kann vom User reduziert werden, indem dieser den Computer stets ordentlich wartet, regelmäßig Updates installiert, eine Firewall einrichtet und einen Virenscanner laufen lässt. Weiterer Ansatzpunkt, um die Sicherheit öffentlicher Schlüssel zu verbessern, ist, die Schlüssel mit einem Verfallsdatum zu versehen. Der User kann aber - und dies sei ausdrücklich betont - nicht auf das Gerät selbst zugreifen, weil das Gerät über keinerlei Adressen verfügt. Daher ist es auch nicht möglich, das Gerät in irgendeiner Art und Weise zu konfigurieren. Um dem User eine Wahl zwischen verschiedenen Optionen zu geben, bedient man sich in technischer Hinsicht hilfsweise eines geschützten und konfigurierbaren, bereits erwähnten adressierbaren Moduls.

### b. Empfang einer E-Mail

1. Zunächst sei der Einsatz im Rahmen der E-Mail-Kommunikation ausgeführt. Das in das Gerät implementierte Identifizierungsprogramm erkennt eine E-Mail und deren Sender.
   Fakultativ gleicht es deren Sender mit einer intern geführten Spam-Liste ("Spammer") ab; fällt der Abgleich positiv aus, so wird die E-Mail aussortiert, und in einem Quarantäne-Container abgelegt und fakulativ in einem vom User bestätigten (Wiederholungs-)Fall endgültig gelöscht. Diese Funktionen sollen erfindungsgemäß von einem auf dem adressierbaren Modul befindlichen Scannerprogramm ausgeführt werden.
   Demgemäß wird nach einer strengeren Regelung die Spam-Mail sofort gelöscht, weil eine "Kommunikation" zwischen User und Gerät zum Ausschluss von manipulativen Eingriffen nicht gewünscht ist. Der Abgleich wird daher über eine externe Spam-Liste ("Spammer"), die über einen vertrauenswürdigen und autorisierten Dienstleister abgefragt wird, erfolgen. Die Abwicklung kann auch über das administrative Modul erfolgen.
2. Anschließend wird die nach Schritt 1 überprüfte Datei einer Kontrolle auf Schadsoftware (Viren, Würmer, Trojaner) unterzogen. Fällt hier das Ergebnis nachteilig aus, so wird auch hier die Datei in einen Quarantäne-Container abgelegt. Weil die Sicherheit des E-Mail-Verkehrs im Vordergrund steht und eine Kommunikation zwischen dem User und dem Gerät unerwünscht ist, wird auch hier vorzugsweise die Datei nicht weitergeleitet, sondern sofort gelöscht. In der Regel wird es den User nicht interessieren, mit Schadsoftware behaftete E-Mails oder Nutzdaten zu erhalten.
3. Nach positivem Abschluss der fakultativen Sicherheitskontrollen gemäß Ziffer 1 und 2 läuft eine komplexe Entschlüsselungsprozedur spiegelbildlich zur Verschlüsslungsprozedur ab, wobei ein privater Schlüssel zur Entschlüsselung herangezogen wird. Wenn der Sender (Dritter) einen falschen, kompromittierten Schlüssel oder veralteten Schlüssel verwendet hat, ergeben sich folgende Optionen, weil eine Entschlüsselung nicht durchgeführt werden kann:
   - das Verschlüsselungsprogramm schickt eine Fehlermeldung an den Empfänger
   - das Verschlüsselungsprogramm schickt eine Nachricht an den Sender (Dritter)
   - das Verschlüsselungsprogramm nimmt die E-Mail nicht an und löscht diese
   - das Verschlüsselungsprogramm reicht die Email verschlüsselt an den betreuten Computer weiter
   - das Verschlüsselungsprogramm sendet die E-Mail zurück

Vorzugsweise sendet das Verschlüsselungsprogramm die Email zurück, weil der Sender (Dritter) dann den Fehler erkennen wird und die Möglichkeit hat, die E-Mail ein zweites Mal zu versenden. Verfügt der Sender (Dritter) über das erfindungsgemäße Gerät, so wird dieses aufgrund der internen Logik, nach der das Schlüsselverwaltungsprogramm arbeitet, während des Verschlüsselungsvorgangs einen neuen, aktuellen öffentlichen Schlüssel beim Empfänger anfordern und mit diesem die Verschlüsselungsprozedur durchführen.

### 2. Beispiel: Anschluss von Datenträgern

In einer bereits beschriebenen weiteren Ausführungsform verfügt das Gerät über ein adressierbares Modul, das weitere durchgeschliffene Schnittstellen wie USB, FireWire, Thunderbolt oder dergleichen neben Ethernet oder Funkschnittstellen wie WLAN oder Bluetooth verfügt. Wie bereits erwähnt, ist das Gerät über Ethernet in ein Netzwerk, sei es WLAN / LAN oder WAN, eingebunden, so dass auch hierüber Netzlaufwerke "angeschlossen" werden können. Die Netzlaufwerke werden dabei vom Computer bzw. adressierbaren Modul adressiert und eingebunden; das adresslos eingebundene Gerät liest dabei auch hier nur den Datenstrom mit. Genauso verhält es sich mit den weiteren Anschlüssen wie zum Beispiel dem USB-Anschluss, so dass auch hier das Gerät nur die Daten, die zwischen dem Computer und dem USB-Gerät fließen, mitliest. Das adressierbare Modul mountet automatisch entsprechende externe Dateiträger.

Analog zur Verschlüsselung einer E-Mail übernimmt auch hier das Gerät die weitere vollständige Abwicklung einer Verschlüsselung bzw. Entschlüsselung, beginnend bei der Identifizierung von Nutzdaten, die mit Hilfe eines Schlüssels, der von Seiten des Schlüsselverwaltungsprogramm zur Verfügung gestellt wird, über die Verschlüsselung bzw. Entschlüsselung, die durch das Verschlüsselungsprogramm ausgeführt wird.

Dabei wird auch hier jeder Verwendung der zutreffende Schlüssel, zum Beispiel zum Abfragen einer Datei, zum Öffnen einer Partition oder eines gesamten Laufwerks, zugeordnet. Wird so der Zugang zu der entsprechenden Datenquelle möglich, so kann diese aufgerufen und "on the fly" entschlüsselt werden. Beim Schreiben erfolgt die Verschlüsselung ebenfalls "on the fly".

Zusätzlich hierzu kann die Datenfreigabe durch Verwendung einer PIN, eines Passworts oder anderer Sicherheitsmerkmale sicherer gemacht werden. Ein hierfür notwendiges Programm ist auf dem adressierbaren Modul installiert. Die Einbindung von technischen Lösungen wie Identifizierung via RFID-Chip ist dabei genauso möglich wie mittels NFC (Near Field Communication).

Der wesentliche Vorteil für den User ist, dass dieser sich mit den im Hintergrund ablaufenden technischen Notwendigkeiten nicht auseinandersetzen muss und im Unterschied zum Stand der Technik keinen zeitlichen und gedanklichen Aufwand für eine sichere Verschlüsselung betreiben muss. Bis auf die mögliche Eingabe einer PIN wird der User nichts mitbekommen, weil die Vorgänge von dem Gerät autonom im Hintergrund abgewickelt werden. Dies stellt somit eine erhebliche Zeit- und Arbeitsersparnis für den User dar. Im Rahmen von Cloud Computing können Dateien in der Cloud, d.h. auf einem Dateisystem in einer IT-Infrastruktur eines Dritten abgelegt werden und wird im Übrigen gleichermaßen vorgegangen, so dass Dateien vor dem Zugriff Dritter geschützt verschlüsselt abgelegt werden.

Eine Verschlüsselung ist mit allen nach dem Stand der Technik gängigen Methoden möglich wie S/Mime oder PGP. Regelmäßig sind die Verschlüsselungsprogramme vorinstalliert oder können im Rahmen eines Programmupgrades nachinstalliert werden. Da das Gerät nicht adressierbar ist, bleibt dies einem Fachmann überlassen.

Erfindungsgemäß verschlüsselt das Gerät die übermittelten Daten, wobei die Datei- und die Ordnerstruktur ebenso wie das Dateisystem (NTFS, FAT) unverschlüsselt erhalten bleiben. Auch hier ist Ziel, die sicherheitsrelevanten, so genannten Nutzdaten zu verschlüsseln, welche vom Gerät anhand der Dateistruktur, in der Regel anhand des Headers erkannt werden.

Gegenüber dem Stand der Technik bietet dies den gravierenden Vorteil, dass in das bestehende Dateisystem auch nicht verschlüsselte Dateien in die vorhandenen Ordner eingefügt werden können. Weiterer Vorteil ist, dass Dateien, egal ob verschlüsselt oder unverschlüsselt, problemlos kopiert werden können.

Ein weiterer wesentlicher Vorteil gegenüber dem Stand der Technik ist, wie oben beschrieben, dass beim Mounten eines Datenträgers dieser vom Betriebssystem erkannt wird und nicht, wie bei einem Datenträger, der beispielsweise mit Truecrypt verschlüsselt ist, unerkannt bleibt und aufgrund einer Systemaufforderung der User ein unwiderrufliches und vollständiges Löschen durch eine fahrlässige Handhabung veranlasst.

### 3. Beispiel: Verschlüsselung eines Chat

Auch bei der über das Internet abgewickelten Chat-Kommunikation besteht ein Bedürfnis, Daten verschlüsselt zu übertragen.

Wenn zwei User über das Internet chatten, bleibt regelmäßig die Seitenstruktur der Webseite erhalten und wird diese nur um den kommunikativen Text auf der jeweiligen Benutzeroberfläche ergänzt. Es besteht daher regelmäßig die Notwendigkeit, diesen zusätzlich von einem der User hinzugefügten Text zu verschlüsseln. Das Gerät ist in der Lage, anhand der Dateistruktur diesen Text zu erkennen und zu verschlüsseln. Dabei verfährt das Gerät ähnlich wie bei den eingangs beschriebenen Methoden der E-Mail- oder Dateiverschlüsselung.

Wenn auf beiden Seiten ein Gerät vorhanden ist, dann läuft der Austausch unproblematisch wie folgt ab, ohne dass die User dies überhaupt bemerken:
Das Identifizierungsprogramm liest den Datenstrom mit, analysiert das Kommunikationsprotokoll, ermittelt die Anwendungsebene, identifiziert die Nutzdaten und reicht die Identifizierungsmerkmale an das Verschlüsselungsprogramm weiter, welches unter Vorlage desselben beim Schlüsselverwaltungsprogramm einen Schlüssel abfragt. Dieses wird dann, wenn ein öffentlicher Schlüssel des Empfängers nicht vorliegt, unter Vorlage des eigenen öffentlichen Schlüssels den öffentlichen Schlüssel des Empfängers anfragen und diesen von dem Gerät des Empfängers übermittelt erhalten. Mithilfe des öffentlichen Schlüssels wird dann die Nutzdatei verschlüsselt und an den Empfänger übermittelt. Dieser entschlüsselt mithilfe des Geräts und des eigenen privaten Schlüssels den Text, so dass dieser in "Klartext" eingebunden wird. Bei der Rückantwort im Chat wird mit der Kommunikation gegenteilig verfahren. Dies gewährleistet, dass der Chat über das Internet verschlüsselt abgewickelt und nur zwischen Gerät und Computer in unverschlüsselter Form übermittelt wird und schließlich auf dem Display des Computers des Senders bzw. Empfängers in Plain-Text angezeigt wird.

### 4. Beispiel: Einrichtung einer VPN Tunnelung

Ebenso kann, wenn auf beiden Seiten das Gerät nach Anspruch 1 vorhanden ist, eine VPN Tunnelung hergestellt werden.

Mittels einer VPN-Software, die auf dem Gerät verfügbar ist, wird eine VPN-Tunnelung zu einem einzubindenen externen Gerät hergestellt. Innerhalb dieser VPN-Tunnelung lassen sich abhängig vom verwendeten VPN-Protokoll die Netzwerkpakete zudem verschlüsseln.

Mit Hilfe dieses nach dem Stand der Technik bekannten Verfahrens kann eine Verbindung dadurch abhör- und manipulationssicher gemacht werden, auch wenn eine Verbindung zum VPN-Partner durch ein unsicheres Netz hindurch aufgebaut wird. Durch die Verwendung von Passwörtern, öffentlichen Schlüsseln oder durch ein digitales Zertifikat kann die Authentifizierung der VPN-Endpunkte gewährleistet werden.

Erfindungsgemäß wird der Austausch der öffentlichen Schlüssel autonom durchgeführt. Ferner wird von dem Gerät auch die Verschlüsselung wie unter Nr. 1. a und 1.b bewerkstelligt, wobei mithilfe des öffentlichen Schlüssels des Empfängers die Daten verschlüsselt an den Empfänger geschickt weden. Umgekehrt verhält es sich genauso. Mithilfe des angeforderten Senderschlüssels verschlüsselt das Empfängergerät.

Der User muss sich auch hier nicht um den Austausch von Zertifikaten kümmern. Da das Gerät über keine Adressen (MAC, IP) verfügt, bedient es sich - wie bereits erwähnt - der Adressen des "betreuten" Computers oder vorzugsweise des adressierbaren Moduls und benutzt diese zum Aufbau und zur Abwicklung der Kommunikation.

### 5. Beispiel: Verschlüsselte Informationen auf Homepages oder in Sozialen Netzwerken

Ein User, der auf einer Homepage oder einer sozialen Plattform Informationen für Dritte wie Bilder, Texte oder Töne speichern oder hinterlegen und diese verschlüsseln will, wählt zum Beispiel über ein Programm (Add-on auf Browser) die Option "Verschlüsselung von Nutzdaten". Dann wird ihm beispielsweise über ein Webinterface die Möglichkeit eröffnet, mindestens folgende Optionen zu wählen:
- Benennung der zu verschlüsselnden Nutzdaten (Bild, Text, Ton)
- Zeitliche Dauer der Zurverfügungstellung der Daten
- Benennung der User (Dritte), denen die Daten zugänglich sind (userspezifisch)

Nach Abschluss der Eingabe der Daten wird das Identifizierungsprogramm bzw. das Verschlüsselungsprogramm aktiviert, und die Nutzdaten bzw. die Identifizierungsdaten der Nutzdaten werden um so genannte Metadaten ergänzt. Gemäß Ziffer 1.a findet sodann eine Verschlüsselung statt.

Ein Besucher, der die Seite aufruft und über ein Gerät verfügt, wird durch dieses auf die verschlüsselte Datei aufmerksam gemacht und gefragt, ob er diese lesen möchte. Die Prozedur läuft im einzelnen wie folgt ab:
Das Identifizierungsprogramm liest den Datenstrom und erkennt die Identifizierungsmerkmale der Nutzdaten sowie die weiteren Metadaten. Daraufhin leitet es die Identifizierungsdaten sowie die Metadaten an das Verschlüsselungsprogramm weiter. Mithilfe dieser Daten fragt das Verschlüsselungsprogramm beim Schlüsselprogramm den zugehörigen Schlüssel ab.

Ist ein Schlüssel beim Schlüsselverwaltungsprogramm vorhanden, so reicht dieses den Schlüssel an das Verschlüsselungsprogramm zur Entschlüsselung der Nutzdaten weiter. Ist ein Schlüssel nicht vorhanden, so erfolgt eine Abfrage beim User nach dem bereits beschriebenen Schema, wobei hier im Unterschied zum unter Ziffer 1 beschriebenen Schema weitere Informationen von dem betreuten Computer oder vorzugsweise von dem adressierbaren Modul abgefragt werden (userspezifische Daten) bzw. abgefragt wird, ob der User berechtigt ist, den Schlüssel zu beziehen. Ist er berechtigt, so versendet das Schlüsselverwaltungsprogramm des Users den Schlüssel an den Computer des Betreuers. Das vorgeschaltete Gerät liest den Datenstrom mit, erkennt die Informationen und verwendet diese zur Entschlüsselung der Daten wie unter Ziff 1. b bereits beschrieben. Ist der User nicht berechtigt, so erhält dieser einfach den Schlüssel nicht.

Daher empfiehlt es sich auch, das adressierte Modul, das im übrigen auch Routerfunktionen anbietet, ständig in Betrieb zu haben. Auf diesem adressierten Modul sind , wie bereits beschrieben, die Daten hinterlegt, welche Nutzdaten von welchem User innerhalb welchen Zeitraums abgerufen werden dürfen. Der gesamte Vorgang läuft sehr zeitnah ab, so dass hier von einer Echtzeitübermittlung (weiche Echtzeit) gesprochen werden kann,

Erfindungsgemäß wird daher ein System vorgeschlagen, bestehend aus mindestens zwei erfindungsgemäßen Geräten, denen jeweils ein adressierbares Modul zugeordnet ist, um eine reibungslose und schnelle Kommunikation bzw. einen reibungslosen und schnellen Datenaustausch zu gewährleisten.

### Figurenbeschreibung

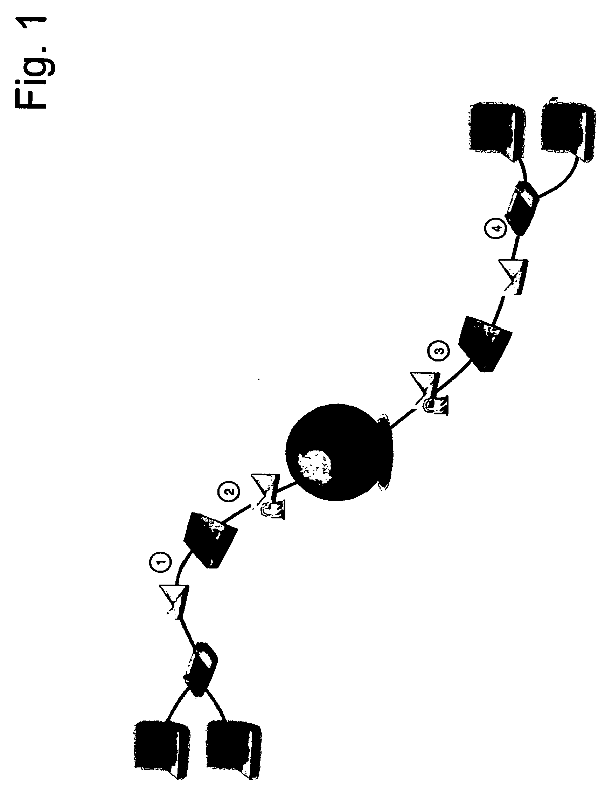

Die Erfindung ist schematisch in den nachstehenden Figuren 1 und 2 verdeutlicht.

In Figur 1 sind links oben stellvertretend für die Absender zwei Laptops zu erkennen, rechts unten zwei Empfänger. Die gesendeten E-Mails durchlaufen die Stationen 1 und 2 und werden über das Internet, versinnbildlicht durch die Weltkugel, an die Stationen 3 und 4 und anschließend an zwei Empfänger versendet.

Die Stationen 1-4 haben die folgende Bedeutung:
1. User versendet gewöhnlich eine E-Mail. Besondere Einstellungen oder gar eine Konfiguration oder Zusatzsoftware sind nicht nötig.
2. Das Gerät (safeN@il) filtert die E-Mail aus der Leitung heraus, kümmert sich um den Austausch der notwendigen Schlüssel mit dem Empfänger und verschlüsselt die Nachricht, bevor sie das lokale Netz verlässt.
3. Beim Empfänger wird die E-Mail erneut aus dem Datenfluss herausgefiltert und - bevor sie an das lokale Netz weitergegeben wird - von dem Gerät (safeN@il) mit dem passenden Zertifikat entschlüsselt. Spam wird bereits hier erkannt und gefiltert.
4. Der Empfänger der Nachricht erhält die E-Mail ohne zusätzlichen Aufwand. Er ist - wie auch der Absender - von keinerlei Software abhängig. Ein manuelles Eingreifen ist nicht notwendig.

Figur 2 zeigt den Austausch des "public key". Das bei dem Verfahren eingesetzte Gerät ist hier ebenfalls mit "SafeN@" bezeichnet. Mit dem Schlosssymbol wird wie schon in Figur 1 die Verschlüsselung bzw. Entschlüsselung ("encrypted transfer") symbolisiert. Beim Versenden einer E-Mail generiert das Gerät automatisch eine Schlüsselanfrage ("key request"). Auf der Empfängerseite antwortet das Gerät und übermittelt den öffentlichen Schlüssel des Empfängers. Mit diesem Schlüssel ("public-key") kann die zu übermittelnde E-Mail verschlüsselt und sicher übertragen werden - nur der Empfänger kann die Nachricht mit seinem privaten Schlüssel ("private-key") entschlüsseln. Bei Eingang der Nachricht wird diese erneut aus dem Datenfluss herausgefiltert, entschlüsselt und an den Empfänger im lokalen Netz weitergereicht. Der Schlüsselaustausch wird autonom - ohne Zutun des Nutzers - durchgeführt.

Wie bereits ausführlich dargestellt, handelt es sich bei dem hier mit "safeN@" bezeichneten Gerät, das bei dem Verfahren nach der Erfindung eingesetzt wird, um ein autonomes, transparent in das LAN eingebundenes Gerät, das E-Mails aus dem Datenfluss der Leitung herausfiltert, interpretiert und entsprechende Vorgänge bzw. Kommunikationsabläufe und - routinen startet bzw. abarbeitet. Der User selbst hat dabei weder Konfigurations- noch Installationsaufwand, während er weder soft- noch hardwareseitig an bestimmte Hersteller oder Marken gebunden ist.

## Patentansprüche

1. Verfahren zur Herstellung einer sicheren Kommunikation zwischen einem Sender und einem Empfänger unter Verwendung eines Geräts, auf dem ein Datenverwaltungsprogramm zur Verwaltung öffentlicher Schlüssel (Schlüsselverwaltungsprogramm) und ein Verschlüsselungsprogramm zur Verschlüsselung von Nutzdaten (Verschlüsselungsprogramm) ausgeführt werden, wobei diese in ein Computernetzwerk zwischen Sender und Empfänger eingebunden sind und das Gerät über mindestens eine durchgeschliffene Computerschnittstelle verfügt, wobei in dem Gerät ein Identifikationsprogramm ausgeführt wird, das einen Datenstrom zwischen Sender und Empfänger mitliest und Nutzdaten identifiziert, herausfiltert und an das vorinstallierte oder durch Programmupgrade nachinstallierte Verschlüsselungsprogramm, welches vom Schlüsselverwaltungsprogramm einen Schlüssel bezieht, zur Verschlüsselung und Weiterleitung an den Empfänger weiterreicht, wobei das Gerät samt seiner Programme nicht identifizierbar in das Computernetzwerk eingebunden ist derart, dass das Gerät als technisches Bindeglied ohne eigene MAC oder IP-Adresse für unberechtigte Dritte und für andere Geräte der Netzinfrastruktur unsichtbar oder von diesen nicht ansteuerbar ist und Identifikations-, Verschlüsselungs- sowie Schlüsselverwaltungsprogramm autonom ohne administrativen Eingriff ausgeführt werden, insbesondere das Schlüsselverwaltungsprogramm eine notwendige Schlüsselabfrage und Schlüsselgenerierung autonom vollzieht.

2. Verfahren nach Anspruch 1, **dadurch gekennzeichnet, dass** das Identifikationsprogramm aus dem Datenstrom neben den Identifikationsmerkmalen der Nutzdaten Applikations- und Protokollmerkmale ermittelt und diese an das Schlüsselverwaltungsprogramm weiterreicht und dieses überprüft, ob den besagten Identifikations-, Applikations- und Protokollmerkmalen ein öffentlicher Schlüssel zuzuordnen ist, wobei das Schlüsselverwaltungsprogramm
a) wenn ein öffentlicher Schlüssel zugeordnet werden kann, diesen dem Verschlüsselungsprogramm zur Verfügung stellt und dieses Nutzdaten verschlüsselt und an den Empfänger weiterleitet,
b) wenn ein öffentlicher Schlüssel nicht zugeordnet werden kann, dieses unter Vorlage des eigenen öffentlichen Schlüssels zur Identifizierung eine Anfrage an den Empfänger schickt derart, dass
c) wenn der Empfänger ebenfalls über ein Gerät nach Anspruch 1 verfügt, dieses automatisch einen öffentlichen Schlüssel generiert und dem Schlüsselverwaltungsprogramm zur Verfügung stellt und dann Schritt a) ausführt,
d) wenn der Empfänger nicht über ein Gerät gemäß Anspruch 1 verfügt, dieser eine Mitteilung erhält und auf diese manuell einen öffentlichen Schlüssel dem Schlüsselverwaltungsprogramm zur Verfügung stellt und dann Schritt a) ausführt,
e) wenn der Empfänger weder über das Gerät gemäß Anspruch 1 verfügt noch auf eine Mitteilung hin einen Schlüssel zur Verfügung stellt, der Sender eine Fehlermeldung erhält, dass die Nutzdaten nicht übertragbar sind.

3. Verfahren nach Anspruch 1 oder 2, **dadurch gekennzeichnet, dass** die Nutzdaten auf mehrere fragmentierte Dateiteile verteilt sind und eingehende Dateifragmente in chronologischer Reihenfolge abgearbeitet werden, wobei verfrüht ankommende Dateifragmente kurzfristig zwischengespeichert und bei zeitlicher Fälligkeit abgearbeitet und versendet werden, wobei ein vorausgegangenes verschlüsseltes Nutzdatum in ein dazugehöriges späteres Nutzdatum bei der Verschlüsselung eingerechnet wird.

4. Verfahren nach einem der Ansprüche 1 bis 3, **dadurch gekennzeichnet, dass** dann, wenn der Verschlüsselungsvorgang nach Anspruch 1 eine definierte Zeitdauer überschreitet, eine Fehlermeldung an den Sender gesendet wird und / oder die Datei im Postausgangsordner verbleibt.

5. Verfahren nach einem der vorhergehenden Ansprüche, **dadurch gekennzeichnet, dass** eine E-Mail so lange beim Sender verbleibt, bis der Empfänger einen Datenstrom herstellt und das Gerät des Empfänger den Datenstrom mitliest und die Schlüsselabfrage des Gerätes des Senders beantwortet und dann das Gerät des Senders eine Verschlüsselung nach Anspruch 1 durchführt.

6. Verfahren nach einem der vorhergehenden Ansprüche, **dadurch gekennzeichnet, dass** folgende Schritte beim Empfang einer E-Mail ausgeführt werden:
a. E-Mails werden nach positivem Abgleich mit einer Negativ-Referenzliste in einen Quarantäne-Container abgelegt und in einem bevorzugten Fall sofort gelöscht,
b. E-Mails werden auf Schadsoftware untersucht und wenn vorliegend in einen Quarantäne-Container abgelegt, in einem bevorzugten Fall sofort gelöscht,
c. wenn Schritt a) und Schritt b) nicht gegeben sind, werden die E-Mails mit dem eigenen privaten Schlüssel entschlüsselt und dem User zur Verfügung gestellt.

7. Verfahren nach einem der vorhergehenden Ansprüche, **dadurch gekennzeichnet, dass** eigene öffentliche und private Schlüssel nach einem Zeitablauf automatisch erneuert und durch neue öffentliche und private Schlüssel ersetzt werden und das Gerät die Erneuerung automatisch vornimmt, wobei
a. nach einer ersten Alternative das Gerät automatisch allen Empfängern, die in der eigenen internen Schlüsseldatenbank aufgeführt sind, den aktualisierten öffentlichen Schlüssel zusendet, vorzugsweise den öffentlichen Schlüssel nur solchen Empfängern zusendet, mit denen innerhalb eines Zeitraums Y Informationen ausgetauscht wurden, vorzugsweise nur solchen Empfängern, mit denen innerhalb eines Zeitraums Y eine Anzahl von Z Informationen ausgetauscht wurden, besonders bevorzugt die Anzahl der E-Mails im Verhältnis zu der versandten Gesamtnachricht in einem hohen Verhältnis stehen,
b. nach einer zweiten Alternative das Gerät dann, wenn eine E-Mail mit einem veralteten eigenen öffentlichen Zertifikat eingeht,
ba. die E-Mail nicht annimmt, so dass diese an den Sender zurückgeht und gleichzeitig hierzu an den Sender einen erneuten öffentlichen Schlüssel sendet, so dass der Sender mit seinem Gerät nach Anspruch 1 die Verschlüsselung mit dem erneuten öffentlichen Schlüssel vornimmt und anschließend an den Empfänger zustellt,
bb. oder die E-Mail nicht annimmt und sofort löscht und den Sender hierüber informiert und ihm gleichzeitig den erneuerten öffentlichen Schlüssel zusendet,

8. Verfahren nach einem der vorhergehenden Ansprüche, **dadurch gekennzeichnet, dass** fremde öffentliche Schlüssel für eine definierte Zeit aufbewahrt oder bei Änderung des Schlüssels durch einen neuen ersetzt werden und das Gerät den Austausch des neuen gegen den alten öffentlichen Schlüssel automatisch vornimmt, wobei in dem Fall, in dem eine E-Mail nicht zugestellt, sondern zurückgekommen ist, automatisch von dem Empfänger ein öffentlicher Schlüssel angefordert und mit diesem die Verschlüsselung vorgenommen und erneut zugestellt wird, wobei die Nutzdaten, die auf mehrere fragmentierte Dateiteile verteilt sind, in chronologischer Reihenfolge abgearbeitet werden, in der Form, dass verfrüht ankommende Dateifragmente kurzfristig zwischengespeichert und bei zeitlicher Fälligkeit abgearbeitet und versendet werden, wobei ein vorausgegangenes verschlüsseltes Nutzdatum in ein dazugehöriges späteres Nutzdatum bei der Verschlüsselung eingerechnet wird.

9. Verfahren nach einem der vorhergehenden Ansprüche, **dadurch gekennzeichnet, dass** das Gerät des Senders, das einen Schlüssel beim Empfänger anfordert, eine Nachricht an den Empfänger sendet, wobei die Nachricht beim Empfänger nicht ankommt und das Gerät des Empfängers die Nachricht beantwortet und löscht.

10. Verfahren nach einem der vorhergehenden Ansprüche, **dadurch gekennzeichnet, dass** der Datenstrom, der zwischen einem Computer und externen oder virtuellen Datenträgern fließt, mitgelesen, Nutzdaten identifiziert, herausgefiltert, verschlüsselt und an den Datenträger bzw. umgekehrt entschlüsselt und an den Computer weitergeleitet werden.

11. Verfahren nach Anspruch 10, **dadurch gekennzeichnet, dass** ein externer Datenträger ein USB-Gerät oder dergleichen ist.

12. Verfahren nach einem der vorhergehenden Ansprüche, **dadurch gekennzeichnet, dass** der Datenstrom, der zwischen einem Sender und einem Empfänger in einem Chat fließt, mitgelesen, die Nutzdaten identifiziert, herausgefiltert, verschlüsselt und an den Empfänger gesendet werden, wobei Nutzdaten nur die Daten sind, die der Aktualisierung der Benutzeroberfläche dienen.

13. Verfahren nach einem der vorhergehenden Ansprüche, **dadurch gekennzeichnet, dass** der Datenstrom, der zwischen einem Sender und einer Internetplattform fließt, mitgelesen, Applikations-, Protokoll- und Identifikationsmerkmale ermittelt und Nutzdaten herausgefiltert werden, wobei das Verschlüsselungsprogramm die Nutzdaten verschlüsselt und die Identifikationsmerkmale um weitere Metadaten, insbesondere um User-Merkmale ergänzt, wobei Nutzdaten neben Text- auch Bilddaten sind.

## Claims

1. A method for establishing secure communication between a sender and a recipient using a device on which a data management program for managing public keys (key management program) and an encryption program for encrypting reference data (encryption program) are operated, wherein these are integrated into a computer network between the sender and recipient and the device has at least one looped-through computer interface, wherein an identification program is run in the device which also reads a data stream between sender and recipient and identifies reference data, filters it out and passes it on to the encryption program that has been preinstalled or installed subsequently by a program upgrade, which obtains a key from the key management program for encryption and forwarding to the recipient, wherein the device and its programs is not identifiably integrated in the computer network, in such a manner that the device as a technical link without its own MAC or IP address cannot be seen by unauthorized third parties and other devices in the network infrastructure or cannot be controlled by the latter and identification, encryption and key management programs are executed autonomously without administrative intervention, in particular the key management program completes a necessary key request and key generation autonomously.

2. The method according to claim 1, **characterized in that** apart from the identification features of the reference data, the identification program determines application and protocol features from the data stream and passes them on to the key management program which checks to see whether the aforementioned identification, application and protocol features can be assigned to a public key, wherein the key management program,
a) if a public key can be assigned, makes said key available to the encryption program and encrypts this reference data and passes it on to the recipient,
b) if a public key cannot be assigned, sends an enquiry to the recipient by submitting its own public key for identification, in such a manner that
c) if the recipient also has a device according to claim 1, said device automatically generates a public key and makes it available to the key management program and then executes step a),
d) if the recipient does not have a device according to claim 1, it receives a message and thereupon provides the key management program with a public key manually and then executes step a),
e) if the recipient neither has the device according to claim 1 nor is a key provided in response to a message, the sender receives an error message that the reference data cannot be transmitted.

3. The method according to claim 1 or 2, **characterized in that** the reference data are distributed between a plurality of fragmented file parts and incoming file fragments are processed in chronological order, wherein file fragments which arrive early are cached for a short time and processed and sent at the appropriate time, wherein a previously encrypted user datum is incorporated into an associated subsequent reference data during encryption.

4. The method according to any one of claims 1 to 3, **characterized in that** when the encryption process according to claim 1 exceeds a defined period of time, an error message is sent to the sender and / or the file remains in the Outbox.

5. The method according to any one of the preceding claims, **characterized in that** an e-mail remains with the sender until the recipient produces a data stream and the recipient's device also reads the data stream and the key request from the sender's device is answered and the sender's device then performs an encryption according to claim 1.

6. The method according to any one of the preceding claims, **characterized in that** the following steps are performed when receiving an e-mail:
a. e-mails are quarantined following a positive match with a negative reference list and, in a preferred case, immediately deleted,
b. e-mails are checked for malware, quarantined if any is found and, in a preferred case, immediately deleted,
c. if step a) and step b) do not apply, e-mails are decrypted with an own private key and made available to the user.

7. The method according to any one of the preceding claims, **characterized in that** own public and private keys are automatically renewed after a lapse of time and replaced with new public and private keys and the device automatically carries out the renewal, wherein
a. according to a first alternative, the device automatically sends to all recipients listed in its own internal key database the updated public key, preferably only sends the public key to those recipients with which information has been exchanged over a period Y, preferably only those recipients with which a number of pieces of information Z has been exchanged over a period Y, particularly preferably the number of e-mails is high relative to the total message sent,
b. according to a second alternative, when an email is received with an out-of-date own public certificate, the device
ba. does not accept the e-mail, so that it is returned to the sender and, at the same time, it sends a new public key for this to the sender, so that the sender undertakes the encryption with the new public key using its device according to claim 1 and then sends it to the recipient,
bb. or does not accept the e-mail and immediately deletes it and informs the sender of this and at the same time sends him the new public key.

8. The method according to any one of the preceding claims, **characterized in that** third-party public keys are stored for a defined time or, if the key is changed, replaced with a new one and the device automatically exchanges the new for the old public key, wherein in the event that an e-mail is not delivered, but returned, a public key is automatically requested from the recipient and this is used for encryption and delivered again, wherein the reference data, which are divided between a plurality of fragmented file parts, are processed in chronological order, in such a manner that file fragments which arrive early are cached for a short time and processed and sent at the appropriate time, wherein a preceding encrypted user datum is integrated into an associated subsequent user datum during encryption.

9. The method according to any one of the preceding claims, **characterized in that** the sender's device requesting a key from the recipient sends a message to the recipient, wherein the message is not received by the recipient and the recipient's device answers the message and deletes it.

10. The method according to any one of the preceding claims, **characterized in that** the data stream flowing between a computer and external or virtual data carriers, is read, reference data are identified, filtered out, encrypted and passed on to the data carriers or, conversely, decrypted and passed on to the computer.

11. The method according to claim 10, **characterized in that** an external data carrier is a USB device, or the like.

12. The method according to any one of the preceding claims, **characterized in that** the data stream flowing between a sender and a recipient during a chat is read, the reference data identified, filtered out, encrypted and sent to the recipient, wherein reference data are only those data that serve to update the user interface.

13. The method according to any one of the preceding claims, **characterized in that** the data stream flowing between a sender and an Internet platform is read, application, protocol, and identification features are identified and reference data are filtered out, wherein the encryption program encrypts the reference data and the identification features are supplemented by additional metadata, in particular user features, wherein reference data are image data as well as text data.

## Revendications

1. Procédé destiné à établir une communication sûre entre un émetteur et un destinataire en utilisant un appareil sur lequel sont exécutés un programme de gestion de données pour gérer des clés publiques (programme de gestion de clés) et un programme de cryptage pour crypter des données utiles(programme de cryptage), ceux-ci étant intégrés dans un réseau informatique entre l'émetteur et le destinataire et l'appareil disposant d'au moins une interface informatique bouclée, dans l'appareil étant exécuté un programme d'identification, qui lit et contrôle un flux de données entre l'émetteur et le destinataire et identifie, extrait par filtrage des données utiles et les fait passer au programme de cryptage pré-installé ou post-installé par mise à jour de programme, lequel reçoit de la part du programme de gestion des clés une clé, pour cryptage et transmission au destinataire, l'appareil avec ses programmes étant intégré en n'étant pas identifiable dans le réseau informatique de telle sorte que l'appareil, en tant qu'organe de liaison technique, sans propre adresse MAC ou adresse IP soit invisible pour des tiers non autorisés et pour d'autres appareils de l'infrastructure du réseau et ne soit pas activable par ceux-ci et le programme d'identification, le programme de cryptage, ainsi que le programme de gestion des clés soient exécutés de manière autonome, sans intervention administrative, notamment le programme de gestion des clés accomplisse de manière autonome une interrogation de clé et une génération de clé nécessaires.

2. Procédé selon la revendication 1, **caractérisé en ce qu'**à partir du flux de données, parallèlement à des caractéristiques d'identification des données utiles, le programme d'identification détermine des caractéristiques d'application et de protocole et les fait passer au programme de gestion des clés et celui-ci vérifie si aux caractéristiques d'identification, d'application et de protocole citées il faut affecter une clé publique,
a) si une clé publique peut être affectée, le programme de gestion des clés mettant celle-ci à la disposition du programme de cryptage et celui-ci cryptant des données utiles et les transmettant au destinataire,
b) si une clé publique ne peut pas être affectée, celui-ci envoyant pour l'identification une demande au destinataire, en présentant la propre clé publique, de telle sorte que
c) si le destinataire dispose également d'un appareil selon la revendication 1, celui-ci génère automatiquement une clé publique et la mette à la disposition du programme de gestion des clés et exécute ensuite l'étape a),
d) si le destinataire ne dispose pas d'un appareil selon la revendication 1, celui-ci reçoive un message et suite à ce dernier, mette manuellement une clé publique à la disposition du programme de gestion des clés et exécute ensuite l'étape a),
e) si le destinataire ne dispose pas d'un appareil selon la revendication 1 et suite à un message ne met aucune clé à disposition, l'émetteur reçoive un message d'erreur disant que les données utiles ne sont pas transmissibles.

3. Procédé selon la revendication 1 ou 2, **caractérisé en ce que** les données utiles sont réparties sur plusieurs parties de fichier fragmentées et des fragments de fichiers entrants sont pris en charge par ordre chronologique, des fragments de données arrivant prématurément étant mis à court terme en mémoire-tampon et à échéance temporelle, étant pris en charge et envoyés, une donnée utile cryptée précédente étant incluse dans une donnée utile ultérieure correspondante lors du cryptage.

4. Procédé selon l'une quelconque des revendications 1 à 3, **caractérisé en ce que** si l'opération de cryptage selon la revendication 1 dépasse une durée définie, un message d'erreur est envoyé à l'émetteur et/ou le fichier reste dans le dossier de courrier sortant.

5. Procédé selon l'une quelconque des revendications précédentes, **caractérisé en ce qu'**un courriel reste chez l'émetteur jusqu'à ce que le destinataire établisse un flux de données et l'appareil du destinataire lise et contrôle le flux de données et réponde à la demande de clé de l'appareil de l'émetteur et l'appareil de l'émetteur procède ensuite à un cryptage selon la revendication 1.

6. Procédé selon l'une quelconque des revendications précédentes, **caractérisé en ce que** les étapes suivantes sont réalisées à la réception d'un courriel :
a. après une comparaison positive avec une liste de référence négative, les courriels sont déposés dans un conteneur de quarantaine et dans un cas préféré, immédiatement supprimés,
b. les courriels sont analysés pour détecter les logiciels malveillants et s'il y en a, ils sont déposés dans un conteneur de quarantaine, dans un cas préféré, immédiatement supprimés,
c. si les étapes a) et b) ne sont pas données, les courriels sont décryptés avec la propre clé privée et mis à la disposition de l'utilisateur.

7. Procédé selon l'une quelconque des revendications précédentes, **caractérisé en ce qu'**après écoulement d'une période, des propres clés publiques et privées sont automatiquement renouvelées et remplacées par de nouvelles clés publiques et privées et l'appareil procède automatiquement au renouvellement,
a. selon une première variante, l'appareil envoyant à tous les destinataires qui sont mentionnés dans la propre base de données de clés interne la clé publique mise à jour, de préférence la clé publique seulement aux destinataires avec lesquels dans une période Y, des informations ont été échangées, de préférence seulement aux destinataires avec lesquels dans une période Y, un nombre de Z informations a été échangé, de manière particulièrement préférée, le nombre des courriels se situant dans un rapport élevé par rapport au message total envoyé,
b. selon une seconde variante, si un courriel muni d'un propre certificat public obsolète entre,
ba. n'acceptant pas le courriel, de sorte que ce dernier soit retourné à l'émetteur et simultanément à ce qui précède, envoyant à l'émetteur une clé publique renouvelée, de sorte qu'avec son appareil selon la revendication 1, l'émetteur procède au cryptage avec la clé publique renouvelée et la distribue ensuite au destinataire,
bb. ou n'acceptant pas le courriel et le supprimant immédiatement et en informant l'émetteur et lui envoyant simultanément la clé publique renouvelée.

8. Procédé selon l'une quelconque des revendications précédentes, **caractérisé en ce que** des clés publiques étrangères sont conservées pendant un temps défini ou en cas de modification de la clé, sont remplacées par une nouvelle et l'appareil procède automatiquement au remplacement de l'ancienne clé publique par la nouvelle, dans le cas où un courriel n'est pas distribué, mais repris, une clé publique étant automatiquement demandée par le destinataire et il est procédé au cryptage avec cette dernière et à une nouvelle distribution, les données utiles qui sont réparties sur plusieurs parties de fichiers fragmentées étant prises en charge dans l'ordre chronologique dans la forme que des fragments de fichiers entrant prématurément soient mis en mémoire-tampon à court terme et pris en charge à leur échéance temporelle et envoyés, une donnée utile cryptée précédente étant incluse dans une donnée utile ultérieure correspondante lors du cryptage.

9. Procédé selon l'une quelconque des revendications précédentes, **caractérisé en ce que** l'appareil de l'émetteur qui demande une clé auprès du destinataire envoie un message au destinataire, le message n'arrivant pas chez le destinataire et l'appareil du destinataire répondant au message et le supprimant.

10. Procédé selon l'une quelconque des revendications précédentes, **caractérisé en ce que** le flux de données qui circule entre un ordinateur et des supports de données externes ou virtuels est lu et contrôlé, des données utiles sont identifiées, extraites par filtrage, cryptées et retransmises au support de données ou, inversement décryptées et retransmises à l'ordinateur.

11. Procédé selon la revendication 10, **caractérisé en ce qu'**un support de données externe est un périphérique USB ou similaire.

12. Procédé selon l'une quelconque des revendications précédentes, **caractérisé en ce que** le flux de données qui circule entre un émetteur et un destinataire dans un chat est lu et contrôlé, les données utiles sont identifiées, extraites par filtrage, cryptées et envoyées au destinataire, n'étant des données utiles que les données servant à la mise à jour de l'interface utilisateur.

13. Procédé selon l'une quelconque des revendications précédentes, **caractérisé en ce que** le flux de données qui circule entre un émetteur et une plateforme Internet est lu et contrôlé, des caractéristiques d'application, de protocole et d'identification sont déterminées et des données utiles sont extraites par filtrage, le programme de cryptage cryptant les données utiles et complétant les données utiles avec des métadonnées supplémentaires, notamment avec des caractéristiques d'utilisateur, hormis des données de texte, des données utiles étant également des données d'image.
